## Europäisches Patentamt
## European Patent Office
## Office européen des brevets

(11) Veröffentlichungsnummer: **0 257 283**
**B1**

(12) **EUROPÄISCHE PATENTSCHRIFT**

(45) Veröffentlichungstag der Patentschrift:
09.05.90

(51) Int. Cl.⁵: **F16L 47/02**, B29C 65/22

(21) Anmeldenummer: **87110272.9**

(22) Anmeldetag: **16.07.87**

(54) **Formtiel aus schweissbarem thermoplastischem Material.**

(30) Priorität: **29.08.86 CH 3475/86**

(43) Veröffentlichungstag der Anmeldung:
**02.03.88 Patentblatt 88/9**

(45) Bekanntmachung des Hinweises auf die Patenterteilung:
**09.05.90 Patentblatt 90/19**

(84) Benannte Vertragsstaaten:
**AT BE DE ES FR GB IT NL SE**

(56) Entgegenhaltungen:
**EP-A- 0 173 174
FR-A- 1 372 303**

(73) Patentinhaber: **GEORG FISCHER AKTIENGESELLSCHAFT**, Mühlentalstrasse 105,
CH-8201 Schaffhausen(CH)

(72) Erfinder: **Lehmann, Ernesto, Ungarbühlstrasse 26,
CH-8200 Schaffhausen(CH)**
Erfinder: **Thalmann, Alfred, Brunngasse 71,
CH-8448 Uhwiesen(CH)**

## Beschreibung

Die Erfindung betrifft ein Formteil aus schweissbarem thermoplastischem Material, wie es im Oberbegriff von Anspruch 1 gekennzeichnet ist.

Beim Verschweissen von Formteilen aus thermoplastischem Material mit Hilfe von einem elektrischen Heizdraht aufweisenden und integrierten Heizelementen, wie z.B. Heizwicklungen oder Heizmatten, werden die Hauptparameter für die Schweissverbindung, nämlich die zugeführte elektrische Energie in einem Zeitraum durch das Steuergerät und der Schmelzedruck während der Phase der Energiezufuhr durch das konstruktive Konzept des beheizten Formteiles bestimmt. Letzteres ist entweder durch das in geschlossenen Schweissmuffen eingebrachte Schrumpfvermögen oder z.B. bei radial aufsetzbaren sattelförmigen Formteilen mit entsprechender konstruktiver Ausbildung durch eine von Aussen mittels Spannmitteln aufbringbare Anpresskraft gegeben. Für die Kontrolle einer einwandfeien Schweissung sind jedoch zusätzlich Vorrichtungen an den Formteilen im Bereich der Heizelemente von Vorteil, welche unter dem Namen Schweissanzeigen bekannt geworden sind.

Durch die CH-A 632 078 ist ein Formteil bekannt geworden, welches als Muffe zum Verbinden von Leitungselementen ausgebildet ist und deren Anzeigevorrichtung zur Ueberwachung der Schweissung eine von der Aussenkontur der Muffen ausgehende zylindrische Ausnehmung aufweist, deren Grund in der Nähe des Heizleiters liegt, wodurch eine Wandung zwischen Heizleiter und Ausnehmung vorhanden ist. Diese Ausführung ermöglicht zwar eine direkte Sichtanzeige von vorhandener Schmelze, doch reagiert diese nachteilig auf äussere Einflüsse, wie z.B. Umgebungstemperatur und Wind. Im Extremfall entsteht ein unkontrolliertes Ausfliessen von Schmelze aus der Fügezone, wodurch sich örtlich kein oder ein zu geringer Schweissdruck aufbauen kann, so dass in diesem Bereich keine einwandfreie Schweissverbindung gewährleistet ist.

Weiterhin ist durch die DE-C 2 760 064 eine Schweissmuffe mit einer Schweissanzeigevorrichtung bekannt geworden, welche einen von einem freien Raum umgebenen Fühlerstift aufweist, dessen Fuss am Grund derselben angeordnet ist. Ein unkontrollierter Schmelzeaustritt ist hierbei zwar unwahrscheinlich, wobei allerdings eine direkte Sichtbarmachung der Schmelze im Normalfall auch nicht gegeben ist. Die indirekte Anzeige durch Verschiebung des Stiftes über die Aussenkontur der Muffe ist, unter anderem wegen äusserer Einflüsse, sehr unsicher, so dass insbesonders dickwandigen Formteilen eine zuverlässige Anzeige für eine einwandfreie Schweissverbindung nicht gewährleistet ist.

Eine verbesserte Schweissanzeige ist aus der EP-A1-0173174 ersichtlich, welche einen geschlossenen Hohlraum und einen darin angeordneten Kolben mit einem Anzeigestift aufweist. Nachteilig ist auch hier die indirekte Sichtbarmachung der Schmelze, wobei Fehlanzeigen z.B. durch Gas-oder Dampfdruckbildung entstehen können. Ausserdem ist dei Verschiebung des Kolbens von dessen Reibungsverhältnissen im Hohlraum und damit auch von den Masstoleranzen des Kolbens und des Hohlraumes abhängig, so dass die Anzeige ebenfalls unzuverlässig und zudem in der Herstellung sehr aufwendig ist.

Aufgabe der vorliegenden Erfindung ist die Schaffung von Formteilen mit einer Schweissanzeige der eingangs genannten Art, welche mit möglichst geringem baulichen Aufwand eine direkte Sichtbarmachung der Schmelze gewährleistet, ohne dass diese unkontrolliert aus der Anzeigeeinrichtung ausfliessen kann.

Erfindungsgemäss wird dies durch die kennzeichnenden Merkmale von Anspruch 1 gelöst.

Besonders vorteilhafte Ausgestaltungen der Erfindung sind in den abhängigen Ansprüchen gekennzeichnet.

Die Erfindung ist anhand von Ausführungsbeispielen in den beiliegenden Zeichnungen dargestellt und nachfolgend beschrieben.

Es zeigen:

Fig. 1 einen Längsschnitt eines als Schweissmuffe ausgebildeten Formteiles zum Verbinden zweier Rohrleitungen,

Fig. 2 einen Teilausschnitt durch die Schweissanzeige von Fig. 1,

Fig. 3 die in Fig. 2 dargestellte Anzeigevorrichtung nach erfolgter Schweissung,

Fig. 4 eine Ausführungsvariante der in Fig. 2 dargestellten Schweissanzeige und

Fig. 5 eine weitere Ausführungsvariante der Schweissanzeige.

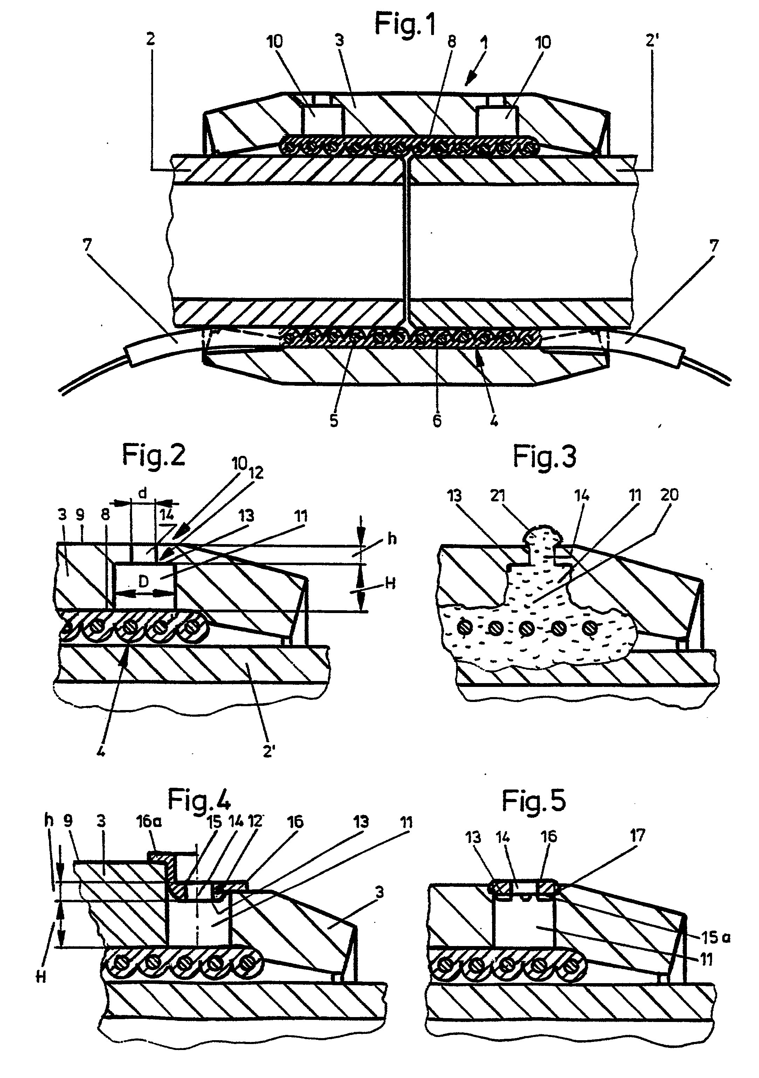

Fig. 1 zeigt ein als Schweissmuffe 1 ausgebildetes Formteil zum Verbinden von Rohrleitungselementen, wie z.B. Enden von Rohrleitungen 2 und 2' aus einem thermoplastischem Material. Ein Formkörper 3 aus einem thermoplastischem Material weist am die Verbindungsfläche 8 bildenden Innenumfang ein Heizelement 4 auf. Das Heizelement 4 besteht aus einem spiralförmig gewundenen Widerstandsdraht 5, welcher mit einer Ummantelung 6 aus thermoplastischem Material versehen ist. Durch Verschweissen der einzelnen Windungen miteinander entsteht eine kompakte Wicklung, wobei deren Enden 7 zum Anschliessen an ein Gerät mit einer Stromquelle an den Enden des Formkörpers 3 herausgeführt sind. Die Zufuhr der Heizenergie wird in dem Gerät derart gesteurt, dass die im Schweissbereich an den Verbindungsflächen 8 entstehende Wärme eine einwandfreie Schweissung zwischen dem Formkörper 3 und den Rohrleitungsenden 2, 2' gewährleistet ist. Damit die für eine gute Schweissung erforderliche Schweissdruck erreicht wird, weist der Formkörper 3 eine Schrumpfspannung auf, welche beim Aufheizen frei wird und den Formkörper 3 auf die Rohrenden 2, 2' drückt. An den beiden Enden des Schweissbereiches ist eine Schweissanzeige 10 angeordnet.

Wie aus Fig. 2 ersichtlich, weist die Schweissanzeige 10 einen als zylindrische Bohrung ausgebildeten Horhlraum 11 auf, welcher am Formkörper 3 zur Verbindungsfläche 8 hin offen und lediglich nach dem Einbringen der Wicklung vom Heizelement 4 abgedeckt ist. In Richtung zu der Aussenkontur 9 des Formkörpers 3 weist der Hohlraum 11 eine Einschnürung 12 mit einer Stau- und Kühlfläche 13 und einer Austrittsöffnung 14 auf.

Durch Wärmeerzeugung mittels elektrischem Strom im Heizelement 4 wird, wie aus Fig. 3 ersichtlich, das Ummantelungsmaterial des Heizelementes 4 sowie die angrenzenden inneren Partien des Formkörpers 3 und die äusseren Partien der Rohrenden 2, 2' plastifiziert, wobei ein Teil des Materials durch den dabei entstehenden Schweissdruck in den Hohlraum 11 gedrückt wird.

Die Schmelze 20 kann in dem von innen her indirekt beheizten Hohlraum 11 gleichmässig steigen, wobei sie bis zu der Stau- und Kühlfläche 13 gelangt. Der äussere Mantel der Schmelze 20 erstarrt hier, wobei nur noch das im Kern befindliche heissere Material in die Austrittsöffnung 14 aufsteigen kann, wo es an der Aussenkontur 9 einen sichtbaren, wenig Material aufweisenden Pfropfen 21 bildet.

Durch die Wahl der Masse D/H für den Hohlraum und d/h für die Austrittsöffnung bzw. der Einschnürung 12 sowie die Form bzw. Oberflächenbeschaffenheit der Stau- und Kühlfläche 13 kann die Menge der austretenden Schmelze klein gehalten werden. Das Mass d sollte im Maximum 3/4 von D betragen.

Fig. 4 zeigt einen Hohlraum 11, dessen Stau- und Kühlfläche 13 mit mindestens einer kreisringförmig angeordneten Rippe 15 zur besseren Kühlung der Schmelze versehen ist. Die Einschnürung 12 wird hierbei durch einen fest mit der Aussenkontur 9 verbundenen Deckel 16 gebildet, welcher die Stau- und Kühlfläche 13 mit der Rippe 15 und die Austrittsöffnung 14 aufweist. Die feste Verbindung kann durch Schweissen oder Kleben erfolgen.

Die Ausführung rechts von der Mittellinie ist vorzugsweise für Schweissmuffen 1 mit kleineren Wandstärken der Formkörper 3 vorgesehen. Bei grösseren Wandstärken der Formkörper 3 wird der in der Fig. 4 links der Mittellinie dargestellte Deckel 16a verwendet. Dieser Deckel 16a weist eine in das Innere des Hohlraumes 11 verlegte Einschnürung 12 auf. Die Länge der Bohrung 14 an der Einschnürung 12 ist dabei ebenfalls kleiner als das Mass H des Hohlraumes 11 bis zu der Einschnürung 12.

Bei der in Fig. 5 gezeigten Schweissanzeige 10 wird die Einschnürung 12 ebenfalls durch einen fest mit dem Formkörper 3 verbundenen Deckel 16 gebildet, welcher mittels eines Gewindes 17 von aussen in den Formkörper 3 eingeschraubt ist. Der Deckel 16 ist mit der Austrittsöffnung 14 versehen, wobei dessen innere Stirnfläche die Stau- und Kühlfläche 13 bildet. In dieser Ausführungsvariante weist die Stau- und Kühlfläche 13 radial verlaufende Rippen 15a auf. Der Deckel 16 kann auch anderweitig, wie z.B. durch einen Festsitz oder eine Schweissung, fest mit dem Formkörper 3 verbunden sein. Die Rippen 15 bzw. 15a können auch bei der in Fig. 2 gezeigten Ausführungsvariante an der Stau- und Kühlfläche 13 angeordnet sein. Damit die Schmelze 20 beim Austritt gut sichtbar ist, kann der Bereich der Aussenkontur 9 um die Austrittsöffnung 14 bzw. die äussere Strinfläche des Deckels 16 gegenüber der Schmelze eine andere Farbe aufweisen.

Die beschriebene Schweissanzeige ermöglicht eine direkte Sichtkontrolle der entstehenden Schmelze, wobei das Erscheinungsbild der Anzeige von äusseren Einflüssen, wie z.B. Umgebungstemperatur, Wind, usw. nur sehr wenig abhängig ist, so dass die direkte Anzeige von Schmelze bei einer einwandfreien Schweissung gewährleistet ist.

Die beschriebene Schweissanzeige 10 kann auch von Vorteil an Formteilen angeordnet werden, welche zum Anschliessen von Abzweigleitungen als Anbohrformstücke, z.B. entsprechend der EP-A1-0170844 ausgebildet sind, oder welche zum Verschweissen miteinander, mit anderen Formteilen und mit dazwischen angeordneten Leitungselementen, z.B. entsprechend der EP-A1-0146775 oder der EP-B1-0076460 ausgebildet sind.

## Patentansprüche

1. Formteil (1) aus thermoplastischem Material zum Verbinden oder Anschliessen von Rohrleitungselementen (2, 2') und anderen Formteilen, mittels einer zum verbindenden Rohrleitungselement (2, 2') bzw. Formteil gerichteten Verbindungsfläche (8), an welcher mindestens ein einen windungsförmig verlaufenden Widerstandsdraht (5) aufweisendes Heizelement (4) anliegend angeordnet ist, und mit mindestens einer, einen Hohlraum (11) aufweisenden Schweissanzeige (10), dadurch gekennzeichnet, dass der Hohlraum (11) zu der Verbindungsfläche (8) hin offen und nur vom Heizelement (4) abgedeckt ist sowie an dem der Verbindungsfläche (8) gegenüberliegenden, zur Aussenkontur (9) des Formteiles (1) gerichteten Ende eine Einschnürung (12) mit einer ringförmigen Stau- und Kühlfläche (13) aufweist und dass eine von der Stau- und Kühlfläche (13) bis zur Aussenkontur (9) des Formteiles (1) reichende Austrittsöffnung (14) zum Austritt der Schmelze angeordnet ist.

2. Formteil nach Anspruch 1, dadurch gekennzeichnet, dass die Stau- und Kühlfläche (13) im wesentlichen senkrecht zur Achse der Austrittsöffnung (14) verläuft und deren Entfernung von der Aussenkontur (9) geringer ist als von der Verbindungsfläche (8).

3. Formteil nach einem der Ansprüche 1 oder 2, dadurch gekennzeichnet, dass die Länge (h) der Bohrung (14) an der Einschnürung (12) kleiner ist als die Tiefe (H) des Hohlraumes (11) bis zur Einschnürung (12).

4. Formteil nach einem der Ansprüche 1 bis 3, dadurch gekennzeichnet, dass die Stau- und Kühlfläche (13) mit umfangsmässig oder radial verlaufenden Rippen (15, 15a) versehen ist.

5. Formteil nach einem der Ansprüche 1 bis 4, dadurch gekennzeichnet, dass die Einschnürung (12) durch einen fest mit dem Formteil (1) an der Aussenkontur (9) verbundenen Deckel (16, 16a) gebildet wird.

6. Formteil nach Anspruch 5, dadurch gekennzeichnet, dass der Deckel (16a) mit einer von der Aussenkontur (9) nach innen versetzten Einschnürung (12) versehen ist.

7. Formteil nach einem der Ansprüche 1 bis 6, dadurch gekennzeichnet, dass der Hohlraum (11) als eine senkrecht oder annähernd senkrecht zur Verbindungsfläche (8) verlaufende Bohrung ausgebildet ist.

8. Formteil nach einem der Ansprüche 1 bis 7, dadurch gekennzeichnet, dass die Aussenkontur (9) des Formteiles (1) im Bereich der Austrittsöffnung (14) eine zur austretenden Schmelze unterschiedliche Farbe aufweist.

## Claims

1. Formed part (1) made from thermoplastic material for joining or connecting pipeline elements (2, 2') and other formed parts, by means of a jointing surface (8) facing the pipe element (2, 2') or shaped part to be joined, with at least one heating element (4) with a coil shaped resistance wire (5) located up against it, and with at least one welding indicator (10) with a cavity (11), characterised in that the cavity (11) is open on the side facing the jointing surface (8) and is only covered by the geating element (4) and has a constriction (12) with a ring-shaped pressure and cooling surface (13) facing the end opposite the jointing surface (8) towards the outer contour (9) of the formed part (1) and that a discharge hole (14) extending from the pressure and cooling surface (13) to the outer contour (9) of a formed part (1) is provided for the smelt to escape.

2. Formed part as in claim 1, characterised in that the pressure and cooling surface (13) runs essentially at right-angles to the axis of the discharge hole (14) and its displacement from the outer contour (9) is less than from the jointing surface (8).

3. Formed parts as in one of the claims 1 or 2, characterised in that the length (h) of the hole (14) at the constriction (12) is smaller than the depth (H) of the cavity (11) to the constriction (12).

4. Formed part as in one of the claims 1 to 3 inclusive, characterised in that the pressure and cooling surface (13) is made with ribs (15, 15a) running circumferentially or radially.

5. Formed part as in one of the claims 1 to 4 inclusive, characterised in that the constriction (12) is formed by a cover (16, 16a) rigidly joined to the formed part (1) on the outer contour (9).

6. Formed part as in claim 5, characterised in that the cover (16a) is provided with a constriction (12) running from the outer contour (9) inwards.

7. Formed part as in one of the claims 1 to 6 inclusive, characterised in that the cavity (11) is designed as a hole running at right-angles or almost at right-angles to the jointing surface (8).

8. Formed part as in one of the claims 1 to 7 inclusive, characterised in that the outer contour (9) of the formed part (1) has a different colour to the emerging smelt in the area of the discharge hole (14).

## Revendications

1. Pièce moulée en matériau thermoplastique destinée à relier ou à raccorder des éléments (2, 2') de conduits tubulaires et d'autres pièces moulées au moyen d'une surface de liaison (8) dirigée vers l'élément (2, 2') de conduit tubulaire ou vers la pièce moulée qu'il s'agit de relier, sur laquelle est placé à plat au moins un élément de chauffage (4) comportant un fil de résistance (5) qui est mis sous forme d'enroulements, et comprenant au moins un indicateur de soudure (10) présentant une cavité (11), caractérisée en ce que la cavité (11) est ouverte en direction de la surface de liaison (8) et n'est recouverte que par l'élément de chauffage (4) et en ce qu'elle présente un rétrécissement (12) comportant une surface annulaire (13) de retenue et de refroidissement à l'extrémité qui est située à l'opposé de la surface de liaison (8) et qui est dirigée vers le contour extérieur (9) de la pièce moulée (1) et en qu'elle comprend une ouverture (14) de sortie, qui s'étend de la surface (13) de retenue et de refroidissement jusqu'au contour extérieur (9) de la pièce moulée (1), en vue de la sortie de la matière fondue de soudure.

2. Pièce moulée selon la revendication 1, caractérisée en ce que la surface (13) de retenue et de refroidissement est disposée sensiblement perpendiculairement à l'axe de l'ouverture de sortie (14) et en ce qu'elle est moins éloignée du contour extérieur (9) que de la surface de liaison (8).

3. Pièce moulée selon une des revendications 1 ou 2, caractérisée en ce que la longueur (h) de l'alésage (14) à l'endroit du rétrécissement (12) est plus faible que la profondeur (H) de la cavité (11) jusqu'au rétrécissement (12).

4. Pièce moulée selon une des revendications 1 à 3, caractérisée en ce que la surface (13) de retenue et de refroidissement est munie de nervures (15, 15a) qui s'étendent de manière périphérique ou radiale.

5. Pièce moulée selon une des revendications 1 à 4, caractérisée en ce que le rétrécissement (12) est formé par un couvercle (16, 16a) fixé à la pièce moulée (1) sur le contour extérieur (9).

6. Pièce moulée selon la revendication 5, caractérisée en ce que le couvercle (16a) est muni d'un rétrécissement (12) décalé vers l'intérieur par rapport au contour extérieur (9).

7. Pièce moulée selon une des revendications 1 à 6, caractérisée en ce que la cavité (11) se présente sous la forme d'un alésage disposé perpendiculairement ou à peu près perpendiculairement à la surface de liaison (8).

8. Pièce moulée selon une des revendications 1 à 7, caractérisée en ce que le contour extérieur (9) de la pièce moulée (1) présente, dans la zone de l'ouverture de sortie (14), une couleur différente de celle de la matière en fusion destinée à sortir.

Fig.1

Fig.2

Fig.3

Fig.4

Fig.5